Europäisches Patentamt

European Patent Office

Office européen des brevets

(11) Veröffentlichungsnummer: **0 209 095**
**A2**

## (12) EUROPÄISCHE PATENTANMELDUNG

(21) Anmeldenummer: 86109538.8

(22) Anmeldetag: 11.07.86

(51) Int. Cl.⁴: **C02F 3/20 , B01F 5/04**

(30) Priorität: 17.07.85 AT 2106/85

(43) Veröffentlichungstag der Anmeldung:
**21.01.87 Patentblatt 87/04**

(84) Benannte Vertragsstaaten:
**AT BE CH DE FR GB IT LI LU NL SE**

(71) Anmelder: **WAAGNER-BIRO
AKTIENGESELLSCHAFT
Stadlauer-Strasse 54
A-1221 Wien(AT)**

(72) Erfinder: **Glasner, Alfred, Dipl.-Ing.**

**A-8162 Passall 237(AT)**

(74) Vertreter: **Wallner, Gerhard, Dipl.-Ing.
Waagner-Biro Aktiengesellschaft
Patentreferat Postfach 11
A-1221 Wien(AT)**

(54) Verfahren zur Begasung und Einrichtung zur Durchführung desselben.

(57) Zur Verbesserung des Ertragswertes bei Begasungseinrichtungen mit Steig-und Fallrohr für Flüssigkeiten wird vorgeschlagen, am Ende des als Fallrohr ausgebildeten Strömungskanals (1) eine oder mehrere Düse(n) (2) vorzusehen, die in eine Mischkammer (3) mündet, in welcher unbegaste Flüssigkeit mit der begasten innig gemischt wird und so zusätzliches Gas aus den Gasblasen in die Flüssigkeit eingebracht wird, wodurch bei gleichbleibendem oder leicht steigendem Energieaufwand bedeutend mehr Gas in Lösung gebracht wird.

Fig.1

EP 0 209 095 A2

## Verfahren zur Begasung und Einrichtung zur Durchführung desselben

Die Erfindung betrifft ein Verfahren zur Begasung, insbesondere Belüftung, von Flüssigkeiten, wie z.B. Abwasser, bei einem Flüssigkeits/Gas-Verhältnis von größer als 3 : 1 in einem Reaktor, bei dem aus einem Becken ein Teil der Flüssigkeit entnommen und mit dem Gas in einem oder mehreren Strömungskanälen in Kontakt gebracht und das Flüssigkeits/Gas-Gemisch hydraulisch verdichtet in das gleiche oder das benachbarte Becken eingeleitet wird, und eine Einrichtung zur Durchführung des Verfahrens. Es ist bekannt (AT PS 319.864 bzw. 336.517), Flüssigkeiten wie z.B. Abwasser einem Becken zu entnehmen, zu heben und wieder in einem Rohr auf etwa das gleiche Niveau abzusenken, wobei im Unterdruckbereich ein Gas wie z.B. Luft oder Sauerstoff durch den Unterdruck in die Flüssigkeit eingesaugt wird und darin verteilt wird. Da die Gase unterschiedliche Löslichkeit in der Flüssigkeit aufweisen und auch Restgase meist in der Flüssigkeit enthalten sind, ist zur vollständigen Lösung einer bestimmten Gasmenge eine große Flüssigkeitsmenge, etwa das 40-fache Volumen, notwendig. Diese Technik ist aber nicht wirtschaftlich und es wird ein Flüssigkeits/Gas-Verhältnis zwischen 10 : 1 und 3 : 1 als optimal angesehen. Dies ist insbesondere wichtig bei biologischen Prozessen, wo es darauf ankommt, eine bestimmte Sauerstoffmenge etwa in diesem Mengenverhältnis in der Flüssigkeit zu lösen, um den biologischen Prozeß optimal zu gestalten. Die Erfindung hat es sich zur Aufgabe gestellt, die Wirtschaftlichkeit der bekannten Begasungsverfahren zu verbessern und die Menge an ungelöstem Gas, insbesondere von Sauerstoff, zu verringern.

Das erfindungsgemäße Verfahren ist dadurch gekennzeichnet, daß das hydraulisch verdichtete Flüssigkeits/Gas-Gemisch vor dem Verlassen des Strömungskanals mindestens einmal in einer Düse, insbesondere auf 0,5 bis 3,0 m/s, beschleunigt und in einer Mischkammer mit zusätzlicher Beckenflüssigkeit durchmischt sowie anschließend einer Austrittsdüse des Strömungskanales zugeführt und in das gleiche oder benachbarte Becken eingeleitet wird. Wesentliche Ausgestaltungen der Erfindung sind in den Unteransprüchen 2 bis 5 angegeben. Die Einrichtung zur Durchführung des Verfahrens ist dadurch gekennzeichnet, daß der Strömungskanal nach Verdichtung des Flüssigkeit/Gas-Gemisches jeweils eine oder mehrere Düsen und eine Mischkammer und am Austrittsende des Kanals eine Austrittsdüse aufweist.

Bei der hydraulischen Verdichtung stellt sich ein Gleichgewicht zwischen der Gaslöslichkeit in der Flüssigkeit und der Gasphase ein, wodurch die Ausnützung des gelösten Gases limitiert ist. In Versuchen ergab sich bei einem 10 m tiefen Wasserbecken bei der Belüftung in einer heberartigen Einrichtung bei einem Wasser/Luft-Verhältnis von 10 : 1 eine Sauerstoffausnützung bei 10°C Außentemperatur von knapp 44 % des Luftsauerstoffes. Wird die Mammutpumpenwirkung unterdrückt, so erhöht sich die Sauerstoffausnützung je Meter Blasenaufstieg um etwa 2,5 %. Berücksichtigt man die Verminderung des Partialdrucks in der Gasphase, können ca. 57 % des Sauerstoffes aus der Luft gelöst werden. Um diesen Wert zu verbessern, muß man das Flüssigkeits/Gas-Verhältnis auf etwa 40 : 1 erhöhen, wobei sich die 44 % auf 75 % erhöhen. Dies hat aber den Nachteil, daß für die etwa 50%ige Verbesserung der Sauerstoffausnützung die 4-fache Flüssigkeitsmenge durch die Pumpe gefördert werden muß. Diese erhöhte Fördermenge ist noch in weiterer Hinsicht unbefriedigend, da bei der sich ergebenden niedrigen Förderhöhe auf Grund des heutigen Standes der Technik in der Pumpentechnologie nur ein schlechter Wirkungsgrad erreichbar ist. Bei geringeren Eintauchtiefen, z.B. 4 m, bei einem Flüssigkeits/Gas-Verhältnis von 5, sinkt die $O_2$-Ausnützung auf etwa 30%.

Es ist daher Ziel der Erfindung, die Sauerstoffausnützung zu steigern, ohne daß die Pumpenleistung überproportional ansteigt. Sinnvoll ist diese Vorgangsweise allerdings nur solange, als mehr Sauerstoff gelöst als Antriebsenergie für die Pumpe unter Berücksichtigung des sich verbessernden Wirkungsgrades von den Pumpen aufgenommen wird. Durch die erfindungsgemäße Ausbildung des Endes eines Fallkanals der heberartigen Belüftungseinrichtung wird überraschenderweise die Sauerstoffausnützung gesteigert, so daß bei Beckentiefen von 1,5 m und im Flüssigkeits/Gas-Verhältnis von etwa 12 : 1 eine Sauerstoffausnützung von mehr als 50 % erreicht wurde. In diesem Fall wurde der Fallkanal auf 4 Düsen aufgeteilt und das zwei-Phasen-Gemisch (Luft/Wasser-Gemisch) in den einzelnen Düsen auf eine Geschwindigkeit von 1,7 m/s erhöht, mit welcher die Flüssigkeit in das Becken ausströmen gelassen wurde. Um diese Werte zu erreichen, mußte bei herkömmlichen Belüftungseinrichtungen ein Flüssigkeits/Gas-Verhältnis von mehr als 30 : 1 erreicht werden. Auf Grund der oben genannten Versuche wurde ein Reaktor entwickelt, der aus einer konventionellen Stufe besteht, in der eine etwa 40%ige Sauerstofflösung erreicht wird und dem am Austritt aus dem Fallrohr eine Mischkammer angeschlossen wurde, in welcher die mit Sauerstoff gesättigte Flüssigkeit mit hoher Geschwindigkeit eingeführt wird. Der Mischer ist ähnlich einem Ejektor ausgebildet und mit der Beckenflüssigkeit verbunden, so daß durch die hohe Strömungsenergie ungesättigtes Beckenwasser mit dem übersättigten Reaktorwasser gemischt wird, wobei im Mischer weitere 30 % des Sauerstoffes gelöst werden, wodurch eine Gesamtausnützung von 70 % erreicht wird.

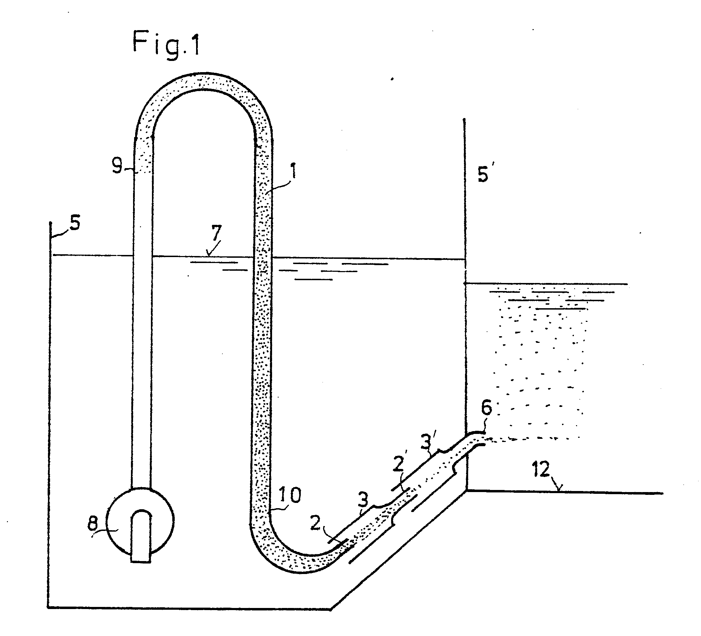

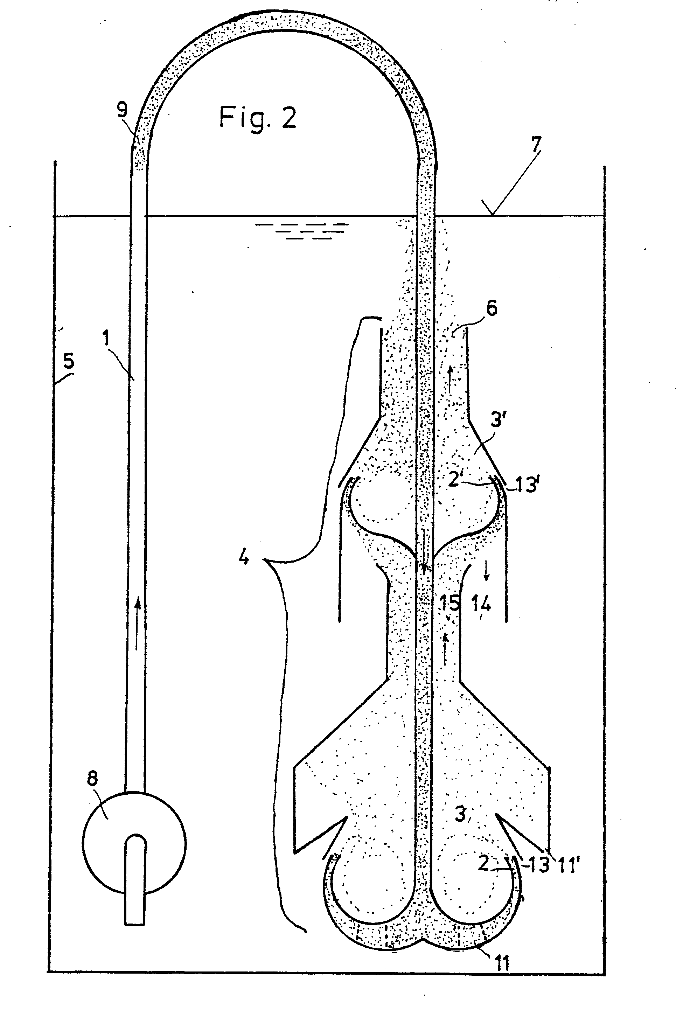

In den angeschlossenen Figuren 1 und 2 ist die erfindungsgemäße Ausgestaltung eines Reaktors in zwei Ausführungen beispielsweise und - schematisch dargestellt.

In Fig. 1 ist in einem Becken 5 ein heberförmig gebogener Strömungskanal 1 vorgesehen, dessen beide Schenkelenden unterhalb des Flüssigkeitsspiegels 7 angeordnet sind. An einem Schenkelende ist eine Tauchpumpe 8 angeschlossen, die die Flüssigkeit in den Heber einsaugt und in ein Unterdruckniveau etwa im Bereich der Umlenkung des Hebers 9 anhebt. Im Unterdruckbereich sind Öffnungen oder durchlässige Wandungsteile vorgesehen, durch welche die Luft in die strömende Flüssigkeit eindringen kann und dort blasenförmig verteilt wird, wobei der Lösungsprozeß beginnt. Für die in der heberartigen Einrichtung strömende Flüssigkeit ist etwa im Bereich des Endes 10 des zweiten Schenkels die maximale Lösung erreicht. Hier wird nun eine Düse 2 vorgesehen, in welcher die gesättigte Flüssigkeit beschleunigt wird, insbesondere auf Werte von 0,5 bis 3,0 m/s . Um diese Düse ist unter Freilassung eines ringförmigen Spaltes eine Mischkammer 3 vorgesehen, in der die durch den ringförmigen Spalt eindringende Flüssigkeit des Beckens 5 mit der Treibflüssigkeit aus der Düse 2 durchmischt wird, wobei weiterer Sauerstoff aus den Blasen gelöst wird. Die Mischkammer ist schräg nach aufwärts gerichtet, so daß die aufsteigenden Gasblasen eine Mammutpumpenwirkung erzeugen. Die Mischkammer ist in ihrem anderen Ende verengt und bildet eine Düse 2', um welche eine weitere Mischkammer 3' angeordnet ist, in der eine weitere Lösung von Sauerstoff erreicht wird. Die zweite Mischkammer weist an ihrem Austrittsende eine Austrittsdüse 6 auf, die insbesondere schlitzförmig ist, wobei die Richtung des Schlitzes etwa parallel zum Beckenboden 12 angeordnet ist. Diese Düse mündet in ein zweites Becken 5', in welchem das belüftete Wasser zur Ausreaktion gelagert wird. Selbstverständlich ist es im Rahmen der Erfindung auch möglich, die Düse 6 auch in das erste Becken 5 münden zu lassen. Entsprechend dem vorhandenen Flüssigkeits/Gas-Gemisch und der Beckentiefe kann auch nur eine Mischkammer 3 oder können eventuell mehr als zwei Mischkammern vorgesehen werden. Gegebenenfalls kann auch das Becken 5' als Mischkammer ausgebildet sein, wobei die Düse 2 mit der Austrittsdüse 6 zusammenfällt.

Im Rahmen der Erfindung ist es auch möglich, am Ende des Strömungskanals 1 auch mehrere parallel geschaltete Mischkammern 3 vorzusehen, die sich jeweils um eine Düse 2 gruppieren, so daß ein größerer Teil der Flüssigkeit des Beckens 5 bzw. eine flä chenmäßig größere Flüssigkeitsschichte an der Sauerstofflösung beteiligen kann, wodurch Ablagerungen im Becken besser beeinflußt werden können. Ebenso kann von der axialen Durchströmung der Mischkammer abgegangen werden, wobei die Düsen 2 tangential zur inneren Seite der Mischkammer angeordnet sind und so eine spiralförmige Durchströmung der Mischkammer bewirken. Der letzte Fall ist besonders dann interessant, wenn die Blasengröße nicht allzu klein ist, so daß eine Blasenverkleinerung angestrebt wird. Bei der Auswahl der Konstruktionsdetails muß davon ausgegangen werden, daß die hohen örtlichen Energiedichten bei derartigen Reaktoren im allgemeinen zu sehr kleinen Blasen führen, welche eine starre Oberfläche besitzen und daher wenig zum Stoffaustausch - (Sauerstofflösung) beitragen. Diese kleinen Blasen führen dann zur Schaumbildung, insbesondere beim Übergang von Reinwasser (Versuchsbedingungen) zu echten Betriebsbedingungen (Abwasser), wodurch die Sauerstoffeintragsleistungen auf etwa 50 % abfallen können. Der Einsatz von Entschäumern kann dabei keine Verbesserung des Stoffüberganges auf den ursprünglichen Wert erreichen, da die Entschäumer offensichtlich den Lösungsmechanismus in der Flüssigkeit blockieren.

Als einfache Düsenform für die Düsen 2 und 6 hat sich ein breitgedrückter Rohrquerschnitt bewährt.

In Fig. 2 ist eine Ausführungsvariante zu Fig. 1 dargestellt, bei der die Tauchpumpe 8 die Flüssigkeit des Beckens umwälzt, wobei eine Begasung erfolgt. Am Ende des zweiten Schenkels des Hebers 9 ist eine mehrstufige Bremse 4 für die entstehende Mammutpumpe angeordnet, die eine bessere Durchmischung des Beckeninhaltes mit der begasten Flüssigkeit bewirkt, wodurch der Gaseintrag bzw. die Lösung des Gases in der Flüssigkeit verbessert wird, so daß das Verhältnis der Gasaufnahme durch Lösung zur Energieaufnahme der Tauchpumpe verbessert wird. Die mehrstufige Bremse 4 besteht im wesentlichen aus Ringdüsen 2, durch die die begaste Flüssigkeit strömt und dabei durch die Öffnungen 13 Beckenflüssigkeit in eine Mischkammer 3 einsaugt, wodurch auch die Beckenflüssigkeit mit den Gasblasen des noch zu lösenden Gases in Kontakt tritt und diese zum Teil auflösen.

Durch die Wechselwirkung von Kanalerweiterungen und Kanalverlängerungen kommt es gleichzeitig zur Entmischung von gesättigter schwerer Flüssigkeit und der leichteren Flüssigkeit, die im wesentlichen die Gasblasen umgibt. Für diese - schwerere Flüssigkeit sind Öffnungen bzw. Kanäle 11, 11', 11'' vorgesehen, durch die auch etwaiger abgesetzter Schlamm in das Becken 5 rückgeführt wird. Dieser Misch-und Entmischvorgang erfolgt je nach Tiefe des Beckens 5 in mehreren Stufen, so daß die Aufstiegsgeschwindigkeit der Gasblasen entsprechend gebremst wird. Da eine normale Mammutpumpe je Meter Blasenaufstiegslänge eine Energie von ca. 100 mm Wassersäule bringt, läßt sich der wirtschaftliche Wert der Erfindung, insbesondere bei größeren Beckentiefen, erkennen, bei der diese freiwerdende Energie zur Durchmischung des Beckeninhaltes mit den aufsteigenden Gasblasen und damit zur besseren Energieausnützung verwendet wird. In diesem Sinn ist die vorliegende Erfindung nicht auf die spezifische Art des Gaseintrages in die Begasungseinrichtung selbst eingeschränkt.

**Ansprüche**

1) Verfahren zur Begasung, insbesondere Belüftung, von Flüssigkeiten, wie z.B. Abwasser, bei einem Flüssigkeits/Gas-Verhältnis von größer als 3 : 1 in einem Reaktor, bei dem aus einem Becken ein Teil der Flüssigkeit entnommen, mit Gas in einem oder mehreren Strömungskanälen in Kontakt gebracht wird und das Flüssigkeits/Gas-Gemisch hydraulisch verdichtet in das gleiche oder das benachbarte Becken eingeleitet wird, dadurch gekennzeichnet, daß das hydraulisch verdichtete Flüssigkeits/Gas-Gemisch vor dem Verlassen des Strömungskanals (1) mindestens einmal in einer Düse (2), insbesondere auf 0,5 bis 3,0 m/s, beschleunigt und in einer Mischkammer (3) mit zusätzlicher Beckenflüssigkeit durchmischt sowie anschließend einer Austrittsdüse (6) des Strömungskanales (1) und in das gleiche oder benachbarte Becken (5, 5') eingeleitet wird.

2) Verfahren nach Anspruch 1, dadurch gekennzeichnet, daß der Strömungskanal (1) austrittsseitig in mehrere sternförmig angeordnete Teilkanäle unterteilt ist, die das austretende Flüssigkeits/Gas-Gemisch in der Beckenflüssigkeit gleichmäßig verteilen.

3) Verfahren nach Anspruch 1, dadurch gekennzeichnet, daß in der Mischkammer das Flüssigkeits/Gas-Gemisch leicht ansteigend geführt ist.

4) Verfahren nach Anspruch 1 oder 3, dadurch gekennzeichnet, daß in der Mischkammer (3) das Flüssigkeits/Gas-Gemisch tangential zur Wandung der Mischkammer mit einer geringen Steigung geführt wird.

5) Einrichtung zur Durchführung des Verfahrens nach Anspruch 1 bis 4, die einen heberartigen Strömungskanal umfaßt, der aus dem Flüssigkeitsraum eines Beckens in den darüber angeordneten Gasraum führt, dort gasdurchlässige Wandungen aufweist und wieder in den Flüssigkeitsraum führt, wo das Flüssigkeits/Gas-Gemisch verdichtet wird, dadurch gekennzeichnet, daß der Strömungskanal (1) nach Verdichtung des Flüssigkeits/Gas-Gemisches jeweils eine oder mehrere Düsen (2) und eine Mischkammer (3) und am Austrittsende des Kanals eine oder mehrere Austrittsdüsen (6) aufweist.

6) Einrichtung nach Anspruch 5, dadurch gekennzeichnet, daß die Austrittsdüsen (6) - schlitzförmige Durchtrittsquerschnitte, insbesondere parallel zum Beckenboden, aufweisen und insbesondere aufgefächert zum Strömungskanal angeordnet sind.

7) Einrichtung nach Anspruch 5, dadurch gekennzeichnet, daß die Austrittsdüsen (6) in eine gemeinsame Richtung weisen.

8) Einrichtung nach Anspruch 5, dadurch gekennzeichnet, daß die Düsen (2,2') als Ringdüsen ausgebildet sind und im wesentlichen konzentrisch zum zweiten Schenkel des Hebers (9) angeordnet sind.

9) Einrichtung nach Anspruch 5, dadurch gekennzeichnet, daß die Mischkammern (3,3') an ihrem unteren Ende Kanäle oder Abführungsöffnungen (11,11') aufweisen, durch welche gesättigte Flüssigkeit und/oder Schlamm in bodennähere Schichten außerhalb der Bremse (4) für die entstehende Mammutpumpe absinken.

10) Einrichtung nach Anspruch 5, dadurch gekennzeichnet, daß zwischen der Mischungskammer (3) und der Düse (2') der folgenden Stufe der Bremse (4) ein vertikaler Steigschacht (13) und koaxial zu diesem ein Sinkschacht (14) vorgesehen ist.

# Fig.1

Fig. 2